# EUROPEAN PATENT SPECIFICATION

(11) **EP 3 798 389 B1**
(45) Date of publication and mention of the grant of the patent: **27.08.2025**
(21) Application number: 19200141.0
(22) Date of filing: 27.09.2019
(51) Int. Cl.: E04H 6/02, F24S 25/00

(54) **STRUCTURE AND ASSEMBLING METHOD FOR A SOLAR CARPORT**
STRUKTUR UND MONTAGEVERFAHREN FÜR EINEN SOLAR-CARPORT
STRUCTURE ET PROCÉDÉ D'ASSEMBLAGE D'UN ABRI SOLAIRE DE VOITURE

(43) Date of publication of application: 31.03.2021
(73) Proprietor: voestalpine Sadef NV, 8830 Hooglede (BE)
(72) Inventor: Depauw, Marc, 8610 Kortemark (BE)
(74) Representative: IP HILLS NV

(56) References cited:
- EP-A1- 2 615 390
- EP-B1- 2 615 390
- WO-A1-2010/123929
- DE-A1- 102010 049 675
- US-A1- 2010 275 975
- ANONYMOUS: "Carport (5,1 x 3,04 m) | BAUHAUS", 4 November 2022 (2022-11-04), pages 1 - 3, XP055977737, Retrieved from the Internet <URL:https://www.bauhaus.info/einzelcarports/carport/p/22933818?gclid=EAIaIQobChMI-MzO1fiT-wIV0IxoCR1ZGgRfEAQYAyABEgICJfD_BwE&ef_id=EAIaIQobChMI-MzO1fiT-wIV0IxoCR1ZGgRfEAQYAyABEgICJfD_BwE:G:s&s_kwcid=AL!5677!3!413131788167!!!g!468430058283!&cid=PSEGoo8995092908_91162661216&pla_campid=8995092908&pla_adgri> [retrieved on 20221104]

## Description

### Field of the Invention

The present invention relates to a structure according to claim 1 for a solar carport. In particular, a solution for stabilizing a solar carport is presented, allowing for an easy and non-intrusive installation process, and resulting in a comfortable carport for drivers parking underneath.

### Background of the Invention

The value of open spaces like e.g. parking areas can be largely enhanced by installing solar carports: carports with a solar panel infrastructure on top, allowing to monetize space that is already in use. On the other hand, in the search to increasingly generate energy in a renewable way, solar carports offer great potential for installing additional solar power.

A carport is an open structure, typically comprising a roof structure carried by posts or columns, and allowing to accommodate regular cars as well as higher types of vehicles like SUV's, vans and small trucks. In general, a solar carport is either built as a solid structure of (reinforced) concrete, or it is constructed from steel profiles that are bolted together to form a steel skeleton. The latter results in a lighter structure of which the elements can easily be transported and quickly be assembled on site. However, because of their open structure, substantial height and light weight, steel solar carports need to be protected against ascending winds that could lift the entire structure.

Several solutions exist where additional ballast is used to offer the required stability of a solar panel installation. For example, in US2013/0269181 underground concrete blocks are used. Using underground ballast for solar carports requires breaking of the existing parking space, resulting in an intrusive and costly installation process. The same disadvantage applies if new foundations are needed for installing the solar carport. The use of a concrete foundation to anchor the structure is e.g. disclosed in DE102010049675A1. Therefore, such solutions are not suitable for existing parking areas, where a minimal damage to the parking ground is required.

US2013/0318894 presents the use of concrete tiles placed over the entire ground surface as ballast underneath the solar panel installation Applying such a solution to solar carports, or providing a concrete base covering the entire existing parking implies a drastic change of the existing space, with the additional burden of eliminating the created level difference.

Another type of solution concerns the use of ballast placed around the posts or columns of a solar panel installation. Usually a fillable type of ballast is used here. An example of such a solution is found in US2010/0212714. In another variant, e.g. found in US2012/0036799, concrete ballast is placed in the area between the posts of a solar panel installation. In US20100275975A1, the vertical support members of the carport are attached to footings to provide additional stability to the frame assembly, and in WO2010123929A1 at least one concrete reinforced support is used. A main disadvantage of placing ballast around or in between the posts of a solar carport, is the introduction of additional obstacles, causing inconvenience for drivers and passengers e.g. when driving in and out or when leaving and entering the vehicle. Another structure according to the state of the art is disclosed in EP2615390A1.

It is an objective of the present invention to disclose a structure and assembling method for a solar carport, that resolves one or several of the above described shortcomings of the prior art solutions. More particularly, it is an objective to present a solution for stabilizing a solar carport, allowing for an easy and non-intrusive installation at an existing parking area, and resulting in a comfortable carport for drivers parking underneath.

### Summary of the Invention

According to a first aspect of the present invention, the above identified objectives are realised by a structure for a solar carport, defined by claim 1, the structure comprising:
- a roof structure adapted to support a solar panel installation, the roof structure comprising profiles adapted to form the skeleton of the roof structure, the profiles comprising longitudinal purlins and transverse beams;
- an infrastructure adapted to mount solar panels, comprised in the solar panel installation, on top of the roof structure, the infrastructure comprising construction elements for carrying, connecting or fixing the solar panels;
- columns adapted to carry the roof structure;
- ballast elements,
wherein the ballast elements are construction elements adapted to be installed in the roof structure, and comprising concrete or reinforced concrete, thereby providing weight for stabilizing the solar carport, such that protection against ascending winds is provided.

Thus, the invention concerns a structure for a solar carport. A solar carport is a carport with a solar panel installation on top. Typically, a solar carport is an open structure comprising columns carrying a roof structure and a solar panel installation mounted on top of the roof structure. A solar panel installation comprises solar panels as well as construction elements e.g. for carrying, connecting or fixing the solar panels. Underneath the carport, between the columns, space is available to park vehicles. Typically, the height of the carport allows parking of regular cars underneath, as well as higher types of vehicles like SUV's, vans and small trucks.

Solar carports are typically installed at a parking area or car park, i.e. an open space providing multiple parking places. The parking area may e.g. be at ground level or may be the top level of a parking tower. A parking place provides space for parking a single vehicle, and has a length and width corresponding to the dimensions of a standard vehicle, with the length being the larger dimension and the width being the smaller dimension. Typically, the parking area provides multiple parking places next to each other, where the widths of the parking spaces together define the length of the parking area. When considering various parking areas, e.g. of different clients willing to install a solar carport, not every parking area is identical. The total length of the parking area as well as the dimensions of an individual parking place may differ from one parking area to the other.

The direction according to the length of the parking area, or according to the width of a single parking space, is defined as the longitudinal direction. The direction perpendicular to the longitudinal direction, i.e. the direction in which cars are parked, is defined as the transverse direction. Typically, the solar carport covers a whole row of parking spaces in longitudinal direction, and a pair of columns is repeated every one, two or more parking places. In the transverse direction, the distance between the columns may be smaller than the length of a parking space, in order to allow easy driving in.

The structure comprises a roof structure, adapted to support a solar panel installation. Typically, the solar panel installation comprises an infrastructure adapted to mount the solar panels on top of the roof structure. The roof structure comprises profiles. Profiles are construction elements with an elongated shape and with a specific cross section repeated along the length. The cross section may be massive (e.g. rectangular, circular, ...), open (e.g. H, I, U, T, Z, ... -shaped cross section) or hollow (square, rectangular, circular, ...). Also more complex cross sections, e.g. customized in view of a specific application or characteristics, are possible. The specific shape of the cross section influences characteristics like the profile's stiffness, strength, deformation and weight. Various production techniques may be used to make a profile, e.g. roll forming, extrusion, welding, casting, etc. A profile is usually made of steel, but also other types of material are possible, e.g. Aluminium, composites, plastics, etc. Typically, profiles are produced in a production environment, and afterwards transported to be assembled on site, e.g. by bolting them together.

The profiles comprised in the roof structure are adapted to form the skeleton of the roof structure. This implies that assembly of the provided profiles leads to a framework that determines the basic configuration of the roof structure. For example, steel profiles bolted together may form such a skeleton, but steel bars or nets merely used for reinforcement (e.g. in a concrete roof), are not adapted to form such a skeleton. Additional to the profiles forming the skeleton, other elements may be comprised in the roof structure. The use of profiles, e.g. steel profiles, as a skeleton for the roof structure results in a lighter structure than when a massive concrete roof is provided. This allows for an easy transport and a short assembly time on site.

The structure further comprises columns, adapted to carry the roof structure. The columns serve as posts of the carport, being installed upright, and the roof structure installed at the top end of the columns. The columns may have different lengths, e.g. in order to cope with level differences across the ground surface. The columns have the necessary form, dimensions and material allowing to carry the roof structure with solar panel installation installed on top. Typically, the columns comprise profiles, e.g. steel profiles, but other embodiments are possible as well.

The structure further comprises ballast elements. A light carport structure, e.g. assembled from steel profiles, needs to be protected against ascending winds that could lift the entire structure. Ballast elements are construction elements providing the necessary weight to the carport. For example, a ballast element may comprise concrete or reinforced concrete, or it may be an element filled with e.g. sand, steel residues or another filling material. The ballast elements are comprised in the roof structure. This implies that ballast elements are installed at height, in the structure carried by the columns. Those ballast elements provide the needed stability protecting against ascending winds. Additionally, some light anchoring to the ground, e.g. by means of bolts, may be used to prevent horizontal shifting of the structure under horizontal winds. This results in a solution with minimal damage to the existing parking ground. Therefore, the use of ballast elements in the roof structure has the advantage that an easy and non-intrusive installation process is obtained, as the existing parking area needs not to be broken or changed. Another advantage is that no additional obstacles are introduced, thereby keeping the space between the columns open. This contributes to the comfort for drivers and passengers, e.g. when driving in and out or when leaving and entering the vehicle.

Optionally, the profiles comprised in the roof structure are steel profiles. Steel profiles, being profiles entirely or mainly made of steel, are often also referred to as construction steel. Steel profiles with various cross sections may be fabricated e.g. using roll forming or another production technique. A specific cross section of a steel profile may be chosen according to desired profile characteristics and ease of assembly. Steel profiles have the advantage that the they can be prefabricated with well-known production techniques, allow for a large variety of cross sections, have predictable characteristics, can easily be transported, and can easily be connected e.g. by means of bolts. Moreover, the use of steel profiles in the roof structure results in a strong but relatively light structure, and allows for a fast assembly on site.

The profiles comprise longitudinal purlins and transverse beams. After assembly, the roof structure comprises profiles extending substantially in longitudinal direction, i.e. following the length of the parking area, and profiles extending substantially in transverse direction, i.e. following the length of a single parking place. The profiles extending in longitudinal direction are referred to as longitudinal purlins. The profiles extending in transverse direction are referred to as transverse beams. Two or more longitudinal purlins are provided, which are installed substantially parallel in the roof structure. Analogously, two or more transverse beams are provided, installed substantially parallel. Using longitudinal purlins and transverse beams has the advantage that a rigid skeleton for the roof structure is obtained, allowing to install solar panels over the whole roof surface.

Optionally, the longitudinal purlins are adapted to position the ballast elements on top of the purlins or between the purlins. This implies that the shape and dimensions of the longitudinal purlins is chosen such that they can support the ballast elements when mounted in the roof structure. Various embodiments are possible. For example, multiple longitudinal purlins may be provided, and ballast blocks may be positioned in transverse direction on top of the parallel longitudinal purlins. In another embodiment, ballast blocks are positioned in longitudinal direction between two longitudinal purlins, where each ballast block rests in two longitudinal profiles at both sides of the ballast element. In yet another embodiment, the ballast elements are mounted in transverse direction between two longitudinal purlins, whereby the ballast elements are connected with the purlins. In various embodiments, the ballast elements may be supported directly by the longitudinal purlins, or some additional supporting profiles may be used in between the purlins and the ballast elements.

Further optionally, the ballast elements are blocks of material to be loosely positioned on top of said purlins or between said purlins. This implies that a ballast element is an isolated block, being positioning in the roof structure. Typically, a block of material is made of a single material, e.g. concrete, or mainly made of one material, e.g. reinforced concrete. During assembly, the blocks of material are loosely positioned on top of or between the purlins. Thus, the ballast elements are not fixed to other parts of the roof structure, but merely friction is relied on for holding them in a fixed position. This implies that a ballast element may be simply a block of material, without having elements allowing for a fixed connection with the rest of the roof structure. This has the advantage that the ballast elements may be produced in a simple and cheap way.

Optionally, the blocks of material are blocks of concrete or reinforced concrete. Reinforced concrete is concrete in which steel is embedded in a such a manner that the two materials act together in resisting forces. The reinforcing steel may be provided as rods, bars, a mesh, a net, etc. The use of concrete or reinforced concrete for the ballast elements has the advantage that a conventional construction material is used, which may be poured on site and offers the necessary weight and durability.

Further optionally, the ballast elements comprise a module frame, the module frame comprising transverse module beams and longitudinal module joists. This implies that a ballast element is not a solid block of ballast material, but comprises a frame. The module frame comprises transverse beams and longitudinal joists. The transverse beams and longitudinal joists are substantially perpendicular, where after mounting in the roof structure, the longitudinal joists are positioned in the longitudinal direction, and the transverse beams are positioned in the transverse direction. The transverse beams and longitudinal joists are for example steel profiles, which are bolted together to form the module frame. In an embodiment, the module frame comprises two longitudinal joists and two transverse beams, defining the borders of the ballast element. In another embodiment, more than two longitudinal joists or transverse beams may be provided. Typically, a ballast material is provided, e.g. concrete or reinforced concrete, within the contour of the module frame. In an embodiment, the ballast element may comprise one or more plates, covering the ballast material at the bottom side and/or the top side of the ballast element. The advantage of a module frame is that such a frame may allow to easily connect the ballast elements to other profiles of the roof structure, or may serve to support other elements like reinforcement bars or nets. Moreover, the module frame may improve the structural characteristics of the ballast element, and may contribute to an enhanced stiffness of the ballast element. The latter allows for a larger span by the ballast elements, such that the number of purlins may be limited, thereby reducing material and installation cost.

Optionally, the structure comprises connection elements adapted to connect the module frame of the ballast elements to the longitudinal purlins. Connection elements may refer to fixing elements like bolts or rivets, but may also comprise tailor-made components like plates or three dimensional components. The connection elements are used to connect the module frame to one or more longitudinal purlins, where the ballast element may be positioned in transverse or longitudinal direction. For example, a tailor-made component may be bolted at one point to the module frame, and at another point to a longitudinal purlin. The connection elements may allow for a detachable connection, e.g. using bolts, or involve a non-detachable connection, e.g. using rivets. The use of connection elements has the advantage that the ballast elements are securely fixed. Moreover, they allow for positioning of the ballast elements in between a single pair of purlins, contributing to a flat surface for installing the solar panel installation.

Further optionally, the ballast elements are prefabricated and comprise:
- a module frame comprising transverse module beams and longitudinal module joists, wherein at least one of the longitudinal module joists comprises perforations;
- reinforcement nets and/or bars placed through the perforations; and
- poured concrete.

In an embodiment, the module frame comprises two transverse module beams and two longitudinal module joists defining the borders of the ballast elements, and one or more additional internal module joists, the latter being perforated. A reinforcement net or reinforcement bars may be placed through those perforations, after which the module frame is filled with poured concrete. The use of reinforcement results in additional strength and stiffness of the ballast element. Furthermore, the perforations in the joists allow for continuous nets or bars covering the whole module, thereby contributing to a durable reinforcement and easy production method.

In an embodiment, the longitudinal module joists may comprise C-profiles. A C-profile is a profile, typically a steel profile, with a C-shaped cross section. The use of C-profiles for the longitudinal module joists has the advantage that reinforcement nets or bars may be supported on a flange of the C-profile. Moreover, the C-profiles may allow for a nice alignment of the ballast elements with the longitudinal purlins, e.g. when the latter are Z-profiles. This contributes to a flat top surface of the roof structure, allowing for an easy installation of the solar panel installation.

Further optionally, the longitudinal purlins are adapted to slide inside one another, to form a continuous longitudinal profile of arbitrary length comprising overlapping purlin zones. This implies that the dimensions and shape, in particular of the cross section, are chosen such that longitudinal purlins can be slid in one another. For example, an open cross section (e.g. H, I, U, T, Z, ... -shaped cross section) or hollow cross section (square, rectangular, circular, ...) may be chosen. In various embodiments, all purlins may have the same cross section, or purlins with different cross sections may be used in the roof structure. By sliding the purlins inside one another a continuous longitudinal profile is obtained. At each position where a purlin is slid into another purlin, a certain degree of overlap is obtained, defining an overlapping purlin zone. The total length of the continuous longitudinal profile may be adapted by changing the degree of overlap of adjacent purlins. This has the advantage that purlins of standard length may be fabricated, while on site the total length of the carport can easily be adapted to the length of the available parking area. This contributes to a cheaper production process, short lead times, and accomplishment of the specific needs of each customer. Moreover, the overlap of adjacent purlins results in zones of additional strength of the continuous longitudinal profile. This has the advantage that a stronger and more stable structure may be obtained.

Optionally, the longitudinal purlins comprise Z-profiles with upper flange larger than their bottom flange, the Z-purlins being alternatingly rotated over 180° to form a continuous longitudinal profile of arbitrary length. This implies that all purlins have the same cross section, namely an asymmetrical Z-profile comprising a short and a long flange. This allows for sliding two profiles in one another, by sliding the short flange of the first purlin inside the long flange of the second purlin and vice versa. The use of such asymmetrical Z-purlins has the advantage that the same profile shape can be used for all longitudinal purlins. This contributes to further standardization of the production process, leading to lower production costs and reduced lead times.

Optionally, the columns and the transverse beams are adapted to form frame unities, a frame unity comprising a pair of columns mutually connected by two transverse beams mounted at opposite transverse sides of the columns. Typically, a carport comprises multiple frame unities, repeated along the longitudinal direction. The provision of frame unities has the advantage that they can be assembled on the ground and installed upright at positions according to the width of available parking places. This contributes to an efficient assembly and satisfaction of the customer's needs.

Further optionally, the longitudinal purlins comprise perforations at regular distance along their length. These perforations enable connection of a longitudinal purlin to columns or parts of the roof structure, e.g. by means of bolts. In an embodiment, perforations at both ends of the purlin are used to connect the purlin to two respective columns. The availability of multiple perforations at regular distance along the length of the purlin enables connection to the columns at varying distances. Indeed, during assembly those perforations may be selected according to the specific position of the columns. This has the advantage that the position of the columns may be chosen according to the specific width of available parking places, while standard purlins can be used. This contributes to a cheaper production process, short lead times, and accomplishment of the specific needs of each customer. Moreover, in an embodiment, the perforations in the longitudinal purlins may be used to connect rafter stays between the columns and the longitudinal purlins, providing additional stability to the structure. Again, the availability of perforations at regular distance allows to use standard purlins and rafter stays, while the width of available parking places may vary.

Optionally, the perforations in the longitudinal purlins are adapted to connect the continuous longitudinal profile to the frame unities in the overlapping purlin zones. This implies that during assembly, those perforations are selected for connection of the continuous longitudinal profile to the frame unities, according to the position of the frame unities. This has the advantage that the position of the frame unities may be chosen according to the specific width of available parking places, while standard purlins can be used. This contributes to a cheaper production process, short lead times, and accomplishment of the specific needs of each customer. Moreover, the connection between the continuous longitudinal profile and the frame unities is such that it happens in the overlapping purlin zones of the continuous longitudinal profile. This has the advantage that connection is made in zones with additional strength due to the overlap, resulting in a stronger and more stable structure.

Further optionally, the structure comprises rafter stays adapted to connect the columns to the transverse beams and/or the longitudinal purlins following an inclined direction relative to the columns. This implies that the direction of an installed rafter stay has a certain angle with the direction of the column it is connected with, and a certain angle with the direction of the transverse beam or longitudinal purlin it is connected with. Mounting of rafter stays has the advantage that an enhanced longitudinal stiffness of the carport is obtained.

Further optionally, at least some of the rafter stays are adapted to connect the columns to the continuous longitudinal profile in the overlapping purlin zones. In an embodiment, perforations at regular distance in the purlins may be used to connect the rafter stays. Connecting in the overlapping purlin zones implies that the connection is provided in a zone where the continuous profile has additional strength due to the overlap. This results in a stronger and more stable structure, where the rafter stays may guarantee the longitudinal stability of the carport under longitudinal wind forces or a longitudinal impact e.g. due to the collision of a vehicle with a column.

According to a second aspect of the present invention the above identified objectives are realized by a solar carport according to claim 16, comprising:
- a structure according to one of the preceding claims;
- a solar panel installation comprising slide-in profiles for solar panels.

A solar panel installation comprises solar panels and may as well comprise construction elements e.g. for carrying, connecting or fixing the solar panels. The solar panel installation comprises slide-in profiles for solar panels. Slide-in profiles are profiles adapted to be mounted on top of the roof structure of the carport, and serving as rails between which photovoltaic panels are slid. An example of a solar panel installation with slide-in profiles is given in EP3123081. Slide-in profiles have the advantage that mounting of the solar panel is made easier and faster. Moreover, as profiles are provided in the roof structure, the slide-in profiles may be easily connected to the roof structure profiles, e.g. by means of bolts. This is not possible in prior art solutions where e.g. a roof entirely in concrete or reinforced concrete is used. Connecting the slide-in profiles to the roof structure profiles has the advantage that protection against uplift forces is obtained.

According to a third aspect of the present invention, the above identified objectives are realized by a method according to claim 17 for assembling a structure for a solar carport comprising:
- providing a structure according to the first aspect of the invention;
- placing the columns in upright position;
- assembling a roof structure at the top of the columns, the roof structure comprising the profiles and the ballast elements.

The columns, profiles and ballast elements are defined as described above for the first aspect of the invention. Placing the columns in upright position implies that a column has a bottom end and a top end, and the column is placed with the top end upwards. Assembling a roof structure at the top of the columns implies that after assembly a structure is obtained comprising a roof structure on top of the columns, but the assembly steps may vary according to various embodiments. For example, in an embodiment the columns may first be placed upright, after which the profiles are connected. In another embodiment, a substructure may be assembled on the ground, e.g. by connecting profiles with columns, after which the substructure is placed upright. Assembling the roof structure also implies that ballast elements are provided in the roof structure. This has the advantage that an easy and non-intrusive installation process is obtained, as the existing parking area needs not to be broken or changed. Another advantage is that no additional obstacles are introduced, thereby keeping the space between the columns open. This contributes to the comfort for drivers and passengers, e.g. when driving in and out or when leaving and entering the vehicle.

Optionally, the method comprises:
- providing profiles comprising longitudinal purlins and transverse beams, the longitudinal purlins comprising perforations at regular distance along their length;
- assembling frame unities, each of the frame unities comprising a pair of columns mutually connected by two transverse beams mounted at opposite transverse sides of the columns;
- placing the frame unities in upright position, according to the width of available parking spaces;
- sliding the longitudinal purlins inside one another, to form a continuous longitudinal profile according to the available total parking length, the continuous longitudinal profile having overlapping purlin zones according to the width of available parking places;
- connecting the overlapping zones of the continuous longitudinal profile to the frame unities using the perforations according to the mutual distance of the frame unities;
- providing rafter stays and connecting at least some of the rafter stays between the columns and the overlapping purlin zones of the continuous longitudinal profile using the perforations according to the mutual distance of the frame unities.

The longitudinal purlins and transverse beams are defined as described above for the first aspect of the invention. In a first step of the method, frame unities are assembled, i.e. pairs of columns are mutually connected by two transverse beams. Typically, this is done on the ground. Usually a carport comprises multiple frame unities, repeated along the longitudinal direction. Next, the frame unities are placed in upright position, according to the width of available parking spaces. This contributes to an efficient assembly and satisfaction of specific customer's needs.

In a next step, the longitudinal purlins are slid inside one another, to form a continuous longitudinal profile. This implies that the dimensions and shape, in particular of the cross section, of the longitudinal purlins are such that they can be slid in one another. For example, an open cross section (e.g. H, I, U, T, Z, ... -shaped cross section) or hollow cross section (square, rectangular, circular, ...) may be chosen. By sliding the purlins inside one another a continuous longitudinal profile is obtained. At each position where a purlin is slid into another purlin, a certain degree of overlap is obtained, defining an overlapping purlin zone. The positions of the overlapping purlin zones are chosen corresponding to the width of available parking places, thereby enabling connection of the overlapping zones to the frame unities. The total length of the continuous longitudinal profile may be adapted by changing the degree of overlap of adjacent purlins. This has the advantage that purlins of standard length may be fabricated, while on site the total length of the carport can easily be adapted to the length of the available parking area. This contributes to a cheaper production process, short lead times, and accomplishment of the specific needs of each customer. Moreover, the overlap of adjacent purlins results in zones of additional strength of the continuous longitudinal profile.

In a next step of the method, the longitudinal purlins are connected to the frame unities using the perforations according to the mutual distance of the frame unities. The perforations enable connection of a longitudinal purlin to columns or parts of the roof structure, e.g. by means of bolts. In an embodiment, perforations at both ends of the purlin are used to connect the purlin to two respective columns. The availability of multiple perforations at regular distance along the length of the purlin enables connection to the columns at varying distances. Indeed, during assembly those perforations may be selected according to the specific position of the columns. This has the advantage that the position of the columns may be chosen according to the specific width of available parking places, while standard purlins can be used. This contributes to a cheaper production process, short lead times, and accomplishment of the specific needs of each customer. Moreover, the connection between the continuous longitudinal profile and the frame unities is done such that it happens in the overlapping purlin zones of the continuous longitudinal profile. This has the advantage that connection is made in zones with additional strength due to the overlap, resulting in a stronger and more stable structure.

In a next step of the method, rafter stays are provided, of which at least some are connected between the columns and the overlapping purlin zones of the continuous longitudinal profile. This results in a stronger and more stable structure, where the rafter stays may guarantee the longitudinal stability of the carport under longitudinal wind forces or a longitudinal impact e.g. due to the collision of a vehicle with a column. Moreover, for connecting those rafter stays to the continuous longitudinal profile, the perforations at regular distance in the purlins are used. This has the advantage that the position of the columns may be chosen according to the specific width of available parking places, while standard purlins and rafter stays can be used.

### Brief Description of the Drawings

Fig. 1 gives a three-dimensional view of a solar carport, according to an embodiment of the invention.
Fig. 2 shows a structure for a solar carport and the positioning of ballast elements therein, according to the embodiment of Fig. 1.
Fig. 3 gives a three-dimensional view of a solar carport, according to a second embodiment of the invention.
Fig. 4 and Fig. 5 show a structure for a solar carport, according to the embodiment of Fig. 3.
Fig. 6 shows a ballast element, according to an embodiment of the invention.
Fig. 7 illustrates a connection element, according to an embodiment of the invention.
Fig. 8, Fig. 9 and Fig. 10 illustrate the use of reinforcement material in a ballast element, according to an embodiment of the invention.
Fig. 11 illustrates the assembly of frame unities, according to an embodiment of the invention.
Fig. 12 shows the bottom side of a column, according to an embodiment of the invention.
Fig. 13 illustrates the assembly of longitudinal purlins, according to an embodiment of the invention.
Fig. 14 shows the cross section of longitudinal purlins, according to an embodiment of the invention.
Fig. 15 shows the assembled columns and profiles of a structure for a solar carport, according to an embodiment of the invention.
Fig. 16 shows the connection of a column with transverse beams and longitudinal purlins respectively, according to an embodiment of the invention.
Fig. 17 illustrates the use of slide-in profiles for mounting photovoltaic panels onto the roof structure of a solar carport, according to an embodiment of the invention.
Fig. 18 gives a top view of a parking area.

### Detailed Description of Embodiment(s)

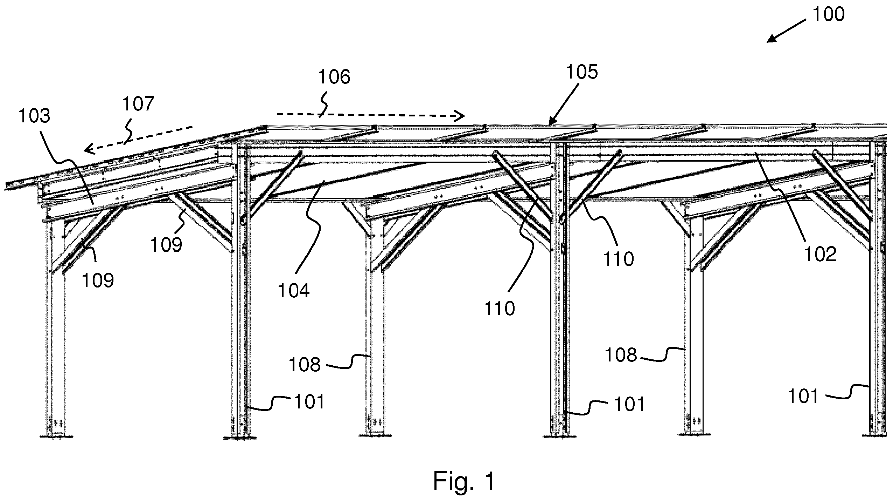

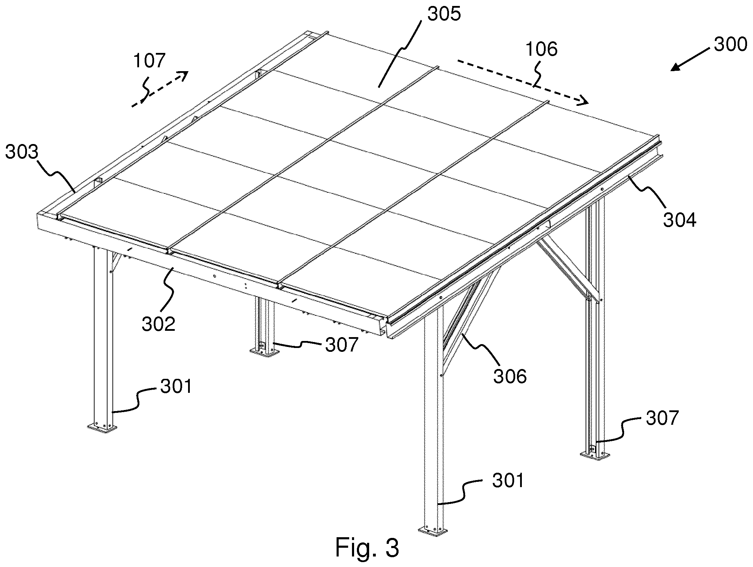

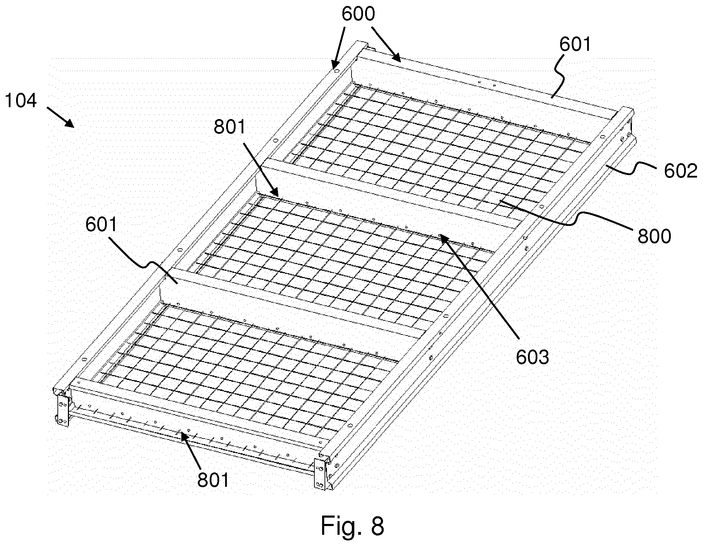

In the figures, two different embodiments are presented. Fig. 1, Fig. 2 and Fig. 6 to Fig. 17 refer to the first embodiment, while Fig. 3 to Fig. 5 refer to the second embodiment.

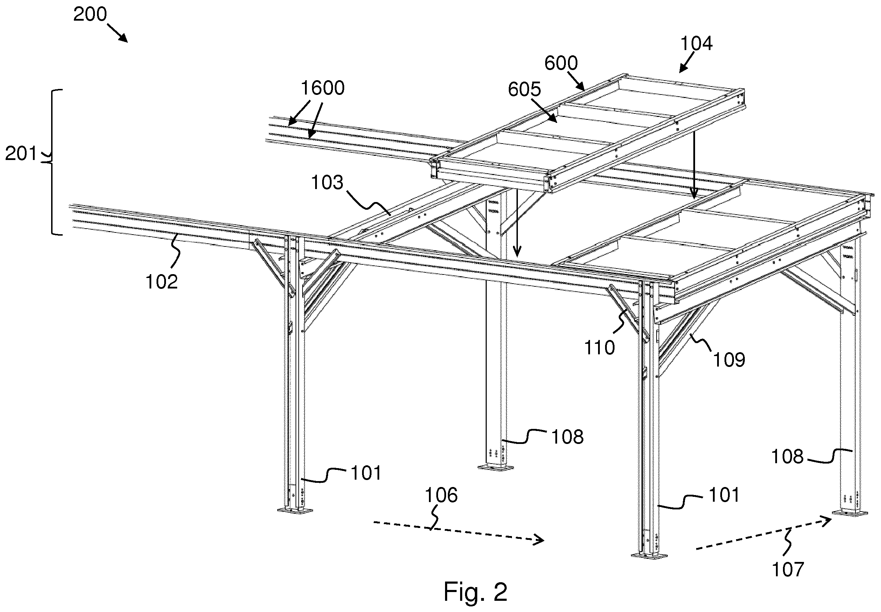

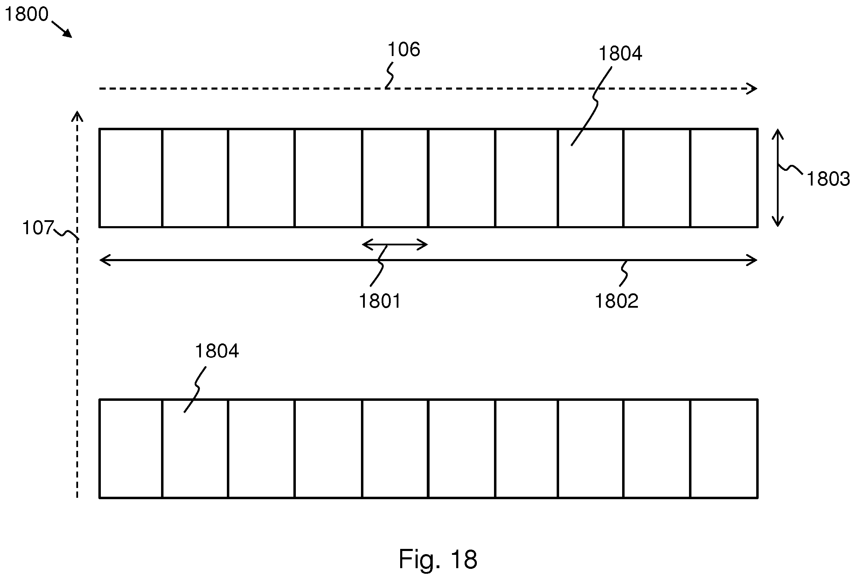

Fig. 1 gives a three-dimensional view of a solar carport 100 according to a first embodiment of the invention, and Fig. 2 further shows the structure 200 for the solar carport 100 according to the same embodiment. The structure 200 comprises columns 101, 108 and a roof structure 201. The roof structure 201 comprises profiles 102, 103 and ballast elements 104. A solar panel installation 105 is installed on top of the roof structure 201. Fig. 1 further shows the longitudinal direction 106 and the transverse direction 107. These directions are also indicated on the floor plan of a parking area 1800 in Fig. 18. Vehicles may be parked in transverse direction 107 underneath the solar carport 100.

Fig. 1 only shows a part of the solar carport 100. The view of Fig. 1 may be repeated along the longitudinal direction 106, such that the carport 100 covers a whole row of parking places 1804. A top view of a parking area 1800, comprising two rows of parking places 1804 is given in Fig. 18. A parking place 1804 offers parking space for one vehicle, and has a length 1803 and a width 1801. The widths 1801 of the parking places 1804 included in one row together define the length 1802 of the parking area 1800. The parking area 1800 may e.g. be at ground level or may be the top level of a parking tower. When considering various parking areas, e.g. of different clients willing to install a solar carport, not every parking area is identical. The total length 1802 as well as the dimensions 1801, 1803 of an individual parking place may differ from one parking area 1800 to the other.

In the carport 100 according to the embodiment of Fig. 1, the longitudinal distance between two columns 101, and between two columns 108, corresponds to the width 1801 of two parking places 1804. For example, the longitudinal distance between two columns 101 may be 4,7 to 5,1 m. In the embodiment of Fig. 1, every pair of parking places 1802 is surrounded by two columns 101 and two columns 108. Other embodiments are possible however, e.g. where only two columns are used per pair of parking places. Moreover, in other embodiments the longitudinal distance between two columns 101 may offer parking space for a single vehicle only or for more than two vehicles. In transverse direction, the distance between a column 101 and a column 108 may be smaller than the length 1803 of a parking place 1804, in order to allow easy driving in. For example, the transverse distance between a column 101 and a column 108 may be 3,7 m. Typically, the height of the carport 100 allows parking of regular cars underneath, as well as higher types of vehicles like SUV's, vans and small trucks. For example, the free vehicle height may be 2,8 m. The plane of the roof structure 201 may have an inclined direction relative to the ground plane of the parking area, in order to facilitate the installation of solar panels at a certain slope, e.g. 8°.

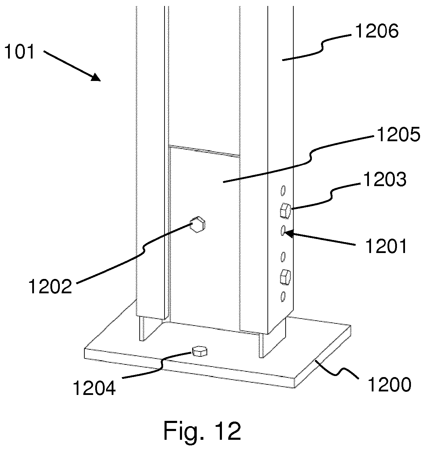

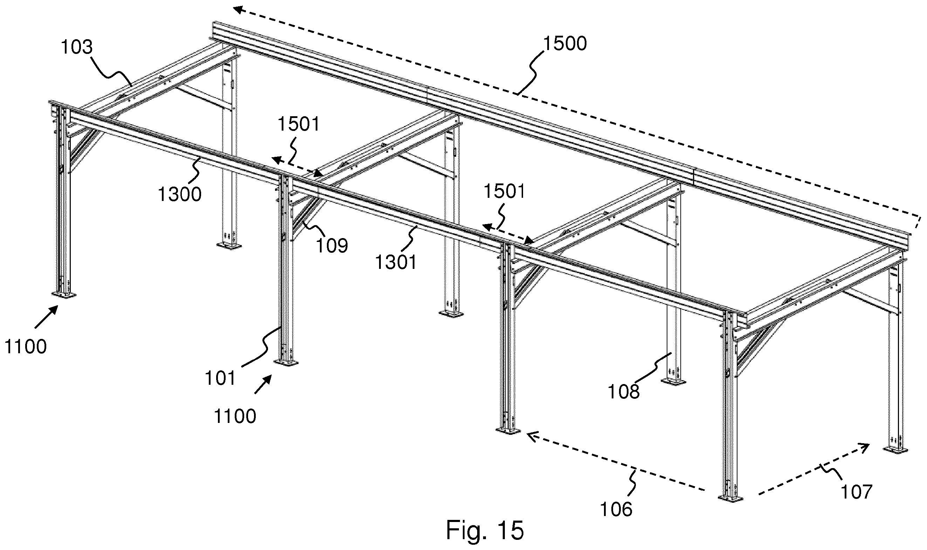

The columns 101, 108 serve as posts of the carport 100, being installed upright, and the roof structure 201 installed at the top end of the columns 101, 108. The columns 101, 108 have the necessary form, dimensions and material allowing to carry the roof structure 201 with solar panel installation 105 installed on top. In the embodiment of Fig. 1 and Fig. 2 the columns are steel profiles with C-shaped cross section, as is also visible from Fig. 12 and Fig. 15. In other embodiments, another shape or material may be used.

The roof structure 201 comprises profiles 102, 103. The profiles installed in longitudinal direction 106 are referred to as longitudinal purlins 102, while the profiles installed in transverse direction 107 are referred to as transverse beams 103. Profiles are construction elements with an elongated shape and with a specific cross section repeated along the length. In the embodiment of Fig. 1 and Fig. 2 the longitudinal purlins 102 are steel profiles with Z-shaped cross section, and the transverse beams 103 are steel profiles with C-shaped cross section. Other materials, e.g. Aluminium, composites, plastics, etc. and other shapes are possible, according to other embodiments. The profiles 102, 103 are adapted to form the skeleton of the roof structure 201. For example, Fig. 15 shows that bolting together of the profiles and columns, results in a basic framework of the carport structure, comprising the roof structure skeleton. Finally, Fig. 1 and Fig. 2 show that rafter stays 110 are mounted between the columns 101, 108, and the longitudinal purlins 102, and rafter stays 109 are mounted between the columns 101, 108 and the transverse beams 103, providing additional stiffness to the structure 200.

Fig. 2 further shows the positioning of ballast elements 104 in the roof structure 201, needed to provide the necessary weight to the carport 100. For example, 1500 kg per foot of the carport 100 is provided. In the embodiment of Fig. 2 the ballast elements 104 comprise a steel module frame 600 filled with poured concrete 605. Fig. 2 shows that the ballast elements 104 are positioned in transverse direction 107 between two longitudinal purlins 102. After positioning, the ballast elements 104 are connected to the longitudinal purlins 102, as will be discussed further underneath. In this way, the complete surface of the roof structure 201 is filled with adjacent ballast elements 104. As is clear form Fig. 1 and Fig. 2, the ballast elements 104 do not introduce any obstacle within the parking space between the columns 101, 108, contributing to the comfort of drivers and passengers.

Fig 3, Fig. 4 and Fig. 5 show a second embodiment of the invention. Fig. 3 shows a carport 300 comprising columns 301, transverse beams 303, 304, edge beams 302, rafter stays 306 and photovoltaic panels 305. Two vehicles may be parked in transverse direction 107, between the columns 301. Fig. 3 only shows a part of the carport 300; typically, the view of Fig. 3 is repeated in longitudinal direction 106, such that the carport 300 covers a whole row of parking places 1804.

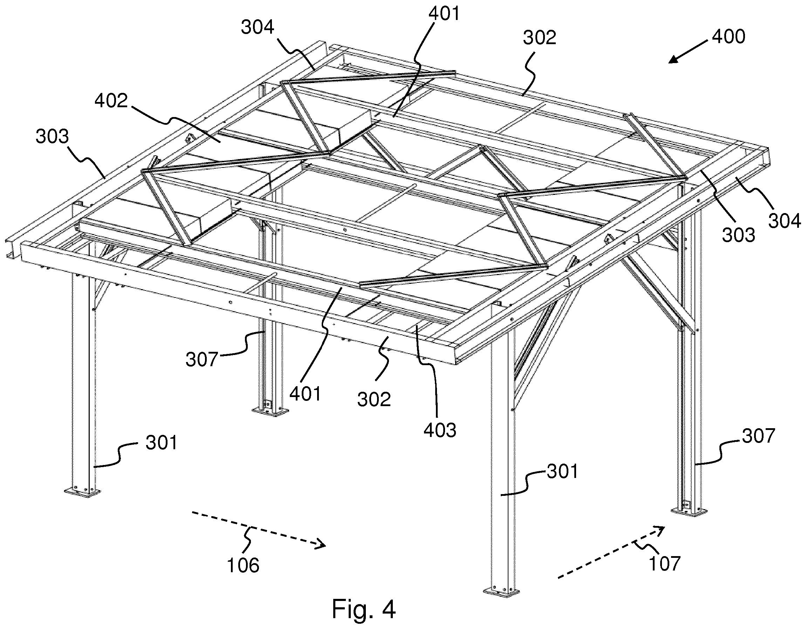

Fig. 4 shows the structure 400 for the carport 300. The figure shows that a pair of columns 301, 307 mutually is connected by means of transverse beams 303 and 304, mounted at opposite transverse sides of the columns 301, 307. In longitudinal direction 106, two transverse beams 303, 304 are connected by means of two edge beams 302 at the boarder of the roof structure. Substantially parallel with the edge beams 302, longitudinal purlins 401 are mounted. The columns 301, 307 are placed corresponding to the width 1801 of the available parking places 1804. Therefore, the length of the edge beams 302 and longitudinal purlins 401 needs to be chosen accordingly, and may differ for different parking areas.

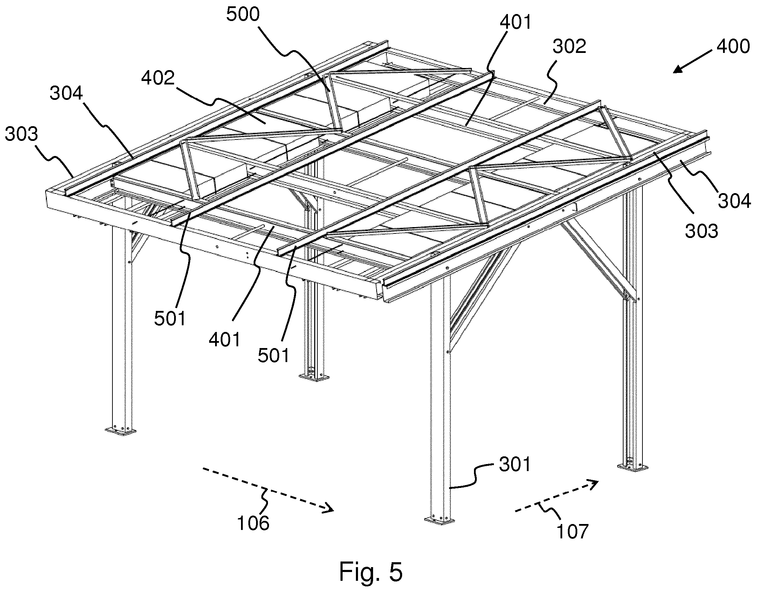

Fig. 4 shows that ballast elements 402 are positioned between the longitudinal purlins 401. The ballast elements 402 are further supported by ballast supporting beams 403 which are mounted in transverse direction 107. In the embodiment of Fig. 4, the ballast elements 402 are blocks of material, e.g. blocks of concrete or reinforced concrete. They are loosely positioned between two longitudinal purlins 401, without being fixed to the purlins 401. In the embodiment of Fig. 4, the ballast elements 402 are oriented according to the longitudinal direction 106, and they are positioned in rows following the transverse direction 107. Fig. 5 further shows how bracings 500 may be placed on top of the ballast elements 402. The bracings 500 are connected to the longitudinal purlins 401 and the edge beams 302. Fig. 5 also shows slide-in profiles 501, adapted to mount the photovoltaic panels 305.

Apart from the two embodiments shown in Fig. 1 to Fig. 2 resp. Fig. 3 to Fig. 5, other embodiments of the invention are possible. For example, the ballast elements 104, 402 may be elements filled with e.g. sand, steel residues or another filling material, instead of comprising concrete. Moreover, the ballast elements 104, 402, may fill the entire surface of the roof structure or may form strips, either in transverse direction 107 or in longitudinal direction 106. Finally, the ballast elements 104, 402 may be positioned on top of longitudinal purlins 102, 401, instead of being positioned in between longitudinal purlins 102, 401.

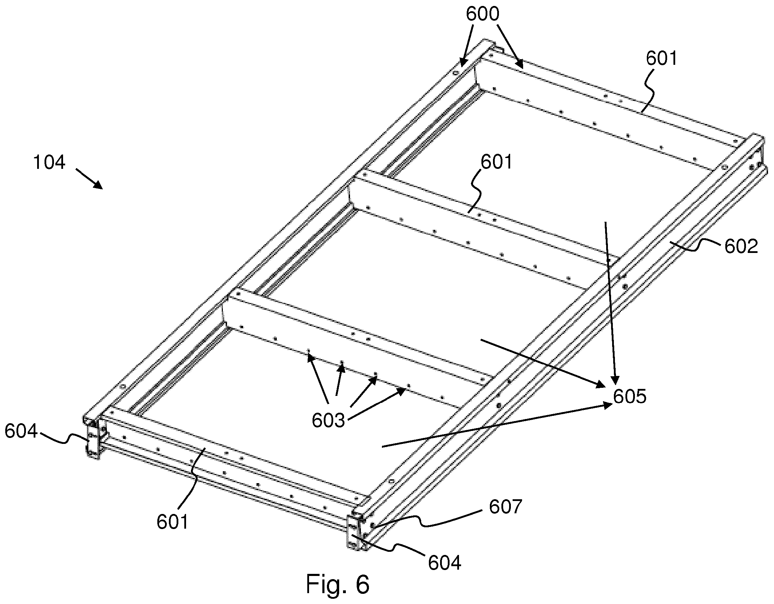

Fig. 6 to Fig. 10 concern a ballast element 104, as used within the first embodiment of Fig. 1 and Fig. 2. Fig. 6 shows that the ballast element 104 comprises a module frame 600, typically a steel frame. The module frame 600 comprises longitudinal module joists 601 and transverse module beams 602. When positioned in the roof structure 201, the longitudinal module joists 601 follow the longitudinal direction 106, while the transverse module beams 602 follow the transverse direction 107, see Fig. 2. In the embodiment of Fig. 6, both the module joists 601 and the module beams 602 are steel profiles with C-shaped cross section. The zones 605 within the module frame 600 is filled with poured concrete or reinforced concrete. Usually, the ballast element 104 is prefabricated, in a production environment or on-site, before being placed in the roof structure 201. In a particular solar carport 100, multiple ballast elements 104 may be used, of which the dimension in longitudinal direction 106 may vary. As such, a series of standard ballast elements 104 of different dimensions may be produced, and for a particular project, the appropriate standard ballast elements 104 may be selected.

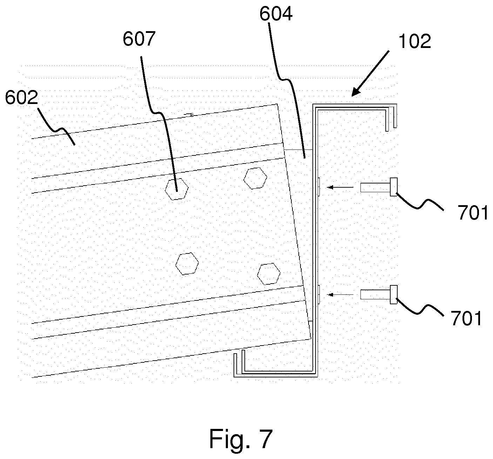

Fig. 6 further shows that connection elements 604 are attached to the transverse module beams 602 by means of bolts 607. A connection element 604 is also shown in Fig. 7, where a cross section perpendicular to the longitudinal direction 106 is shown, of a transverse module beam 602 connected to a longitudinal purlin 102 by means of a connection element 604. Fig. 7 shows that self-tapping bolts 701 are used to connect the connection element 604 to the longitudinal purlin 102. The connection elements 604 therefore allow to firmly connect the ballast elements 104 to the longitudinal purlins 102.

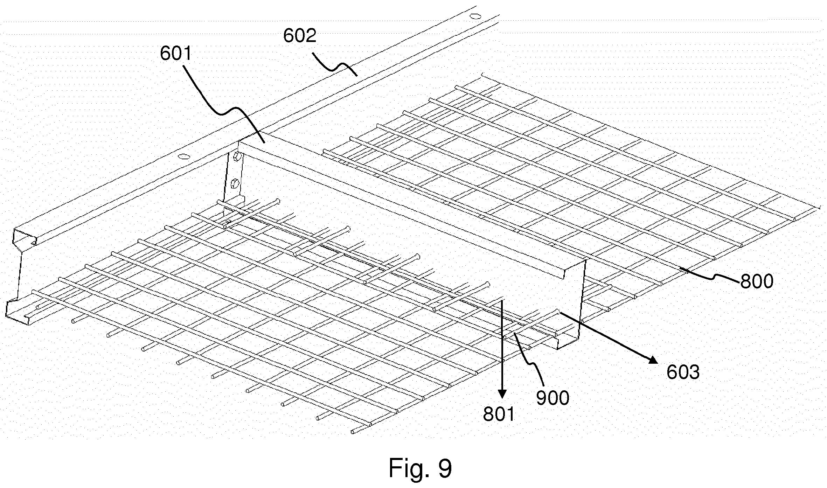

Fig. 6, Fig. 8 and Fig. 9 show that perforations 603 and 801 are provided in the longitudinal module joists 601. The perforations 801 allow a reinforcement net 800 to be placed in the ballast element 104, where the bars of the net 800 parallel with the module beams run through the perforations 801. The perforations 603 allow the use of extra reinforcement bars 900, being placed through the perforations 603, as is visible from Fig. 9.

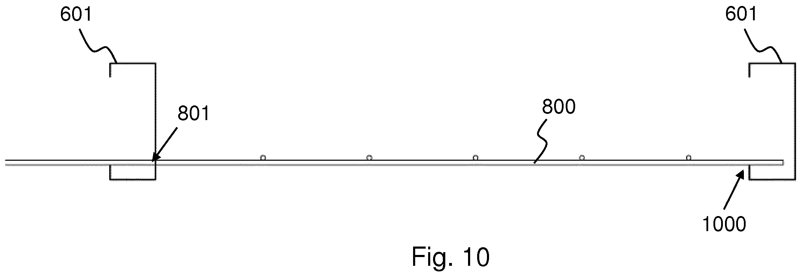

Fig. 10 gives a cross section of the ballast element 104 perpendicular to the longitudinal module joists 601. The cross section of two longitudinal module joists 601 is shown. Fig. 10 shows that bars of the reinforcement net 800 run through the perforations 801 in the module joists 601. In particular, the C-shaped cross section of the module joists 601 allows to support those bars of the reinforcement net 800, see 1000.

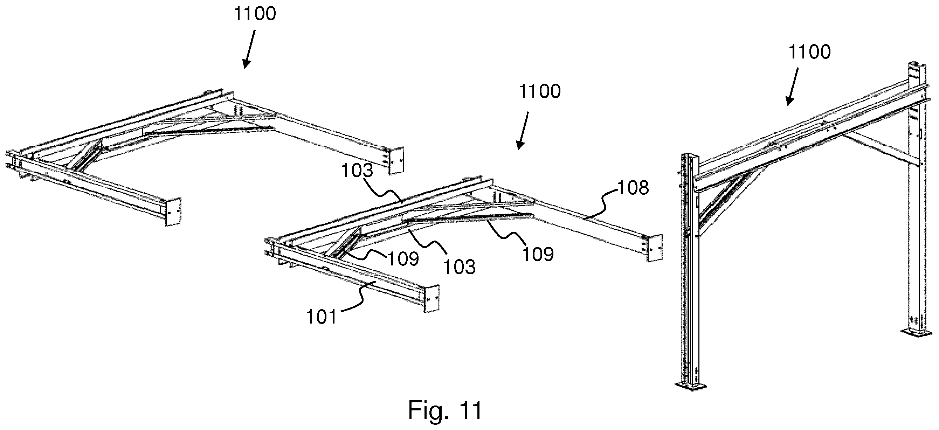

Fig. 11 illustrates the assembly of frame unities 1100. A frame unity 1100 comprises a pair of columns 101 and 108 which are mutually connected by two transverse beams 103 mounted at opposite transverse sides of the columns 101, 108. In the embodiment of Fig. 11, a frame unity 1100 further comprises rafter stays 109, connecting the columns 101, 108 with the transverse beams 103. Fig. 2 and Fig. 15 show that frame unities 1100 are comprised in the structure 200, where the frame unities 1100 are repeated along the longitudinal direction 106. Also in the embodiment of Fig. 5 frame unities are visible in the structure 400.

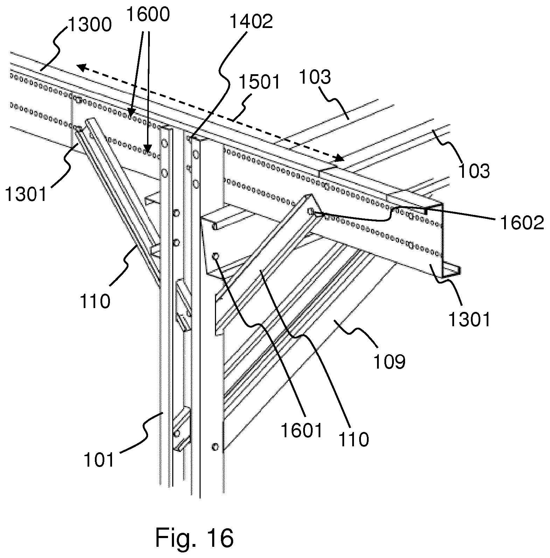

Fig. 11 illustrates that in a first step of the assembly process, the frame unities 1100 may be assembled on the ground, i.e. the columns 101, 108, the transverse beams 103 and the rafter stays 109 are bolted together to form a number of frame unities 1100 lying on the ground. Usually, the columns 101, 108, transverse beams 103 and rafter stays 109 were produced in a production environment, and transported to the parking area for assembly on site. Fig. 16 shows the bolts 1601 for connecting the transverse beams 103 to a column 101. After assembly of the frame unities 1100 on the ground, they are installed upright, with the columns 101 positioned at a longitudinal distance corresponding to the width of the available parking places 1804.

Fig. 12 gives a close view of the bottom side of a column 101, and its connection to the ground of the parking area. Fig. 12 shows a bottom plate 1200, e.g. with a surface of 220 x 300 mm. The bottom plate 1200 is fixed to the ground by means of bolts 1204. The purpose of this anchoring to the ground is only to prevent horizontal shifting of the structure 200 under horizontal forces; the protection against ascending winds results from the ballast elements 104 in the roof structure 201. As such, minimal damage to the parking flour is caused, and no fundamental changes to an existing parking area are required. Moreover, by using two parts 1205 and 1206, being slid in one another, the length of a column 101 is adaptable. A series of holes 1201 allows to select the required length, and bolts 1203 and 1202 allow to fix both parts 1205 and 1206. The adaptable length of the columns 101, 108 allows to eliminate level differences in the parking ground, e.g. being present for draining purposes, or to obtain a certain slope of the roof structure 201. For example, a vertical regulation of the column foot of 100 mm is obtained.

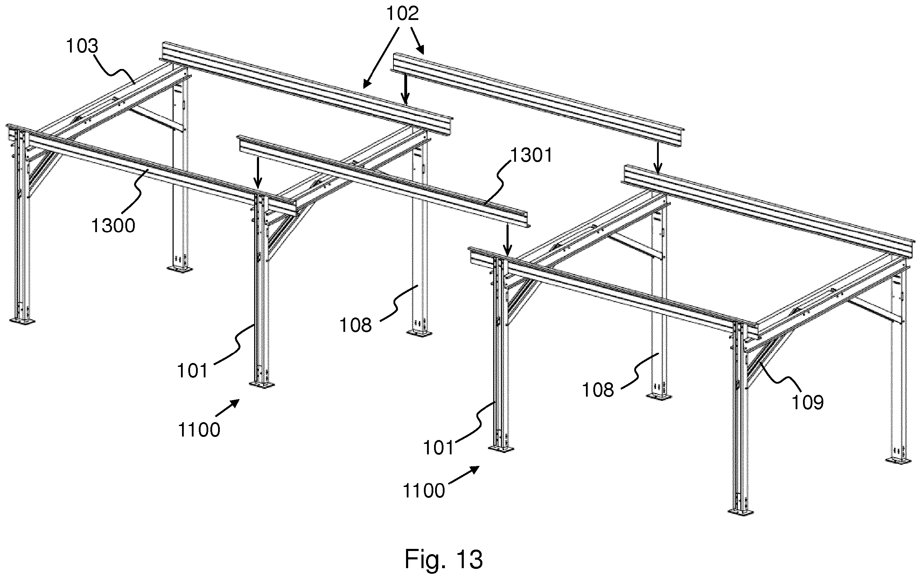

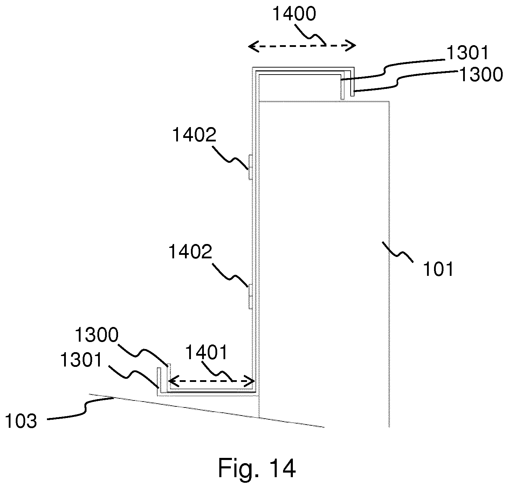

Fig. 13 illustrates a next step in the assembly process of the structure 200. Fig. 13 shows that, after having installed the frame unities 1100, the longitudinal purlins 102 are mounted. Usually, the longitudinal purlins 102 were produced in a production environment, and transported to the parking area for assembly on site. In the embodiment of Fig. 2 and Fig. 13, the longitudinal purlins 102 have a Z-shaped cross section. Fig. 14 shows that the Z-shape of the cross section is asymmetrical, where for the purlin 1300 the upper flange 1400 is larger than the bottom flange 1401. The asymmetrical Z-shaped cross section allows two longitudinal purlins 1300 and 1301 to be slid in one another, by alternatingly rotate the purlins over 180°, as is shown in Fig. 14.

Fig. 15 shows that by sliding the longitudinal purlins 1300, 1301 in each other, a continuous longitudinal profile 1500 of arbitrary length is obtained. As such, the length of the continuous profile 1500 may be adapted according to the total available length 1802 of a particular parking area 1800. Moreover, Fig. 15 shows that the sliding of purlins 1300 and 1301 in each other results in overlapping zones 1501, namely zones in the continuous profile 1500 where two purlins overlap. In the embodiment of Fig. 15, the overlapping purlin zone 1501 are positioned such that connection of the continuous profile 1500 to the frame unities 1100 may be done in the overlap zones 1501. Therefore, the overlap between adjacent purlins 1300, 1301 is chosen according to the width 1801 of the available parking places.

Fig. 16 shows how longitudinal purlins 1300, 1301 are connected to a column 101. Fig. 2 and Fig. 15 show that longitudinal purlins 1300, 1301, 102 comprise perforations 1600 at regular distance along their length. By means of bolts 1402 through two of such perforations 1600, the purlins 1300, 1301 are connected to the column 101. The presence of the perforations 1600 allows to use standard purlins 1300, 1301, being the same for every parking area, while the purlin length between two columns 101 can be adapted according to the particular width 1801 of available parking places 1804. Fig. 16 further shows the zone 1501 where two purlins 1300 and 1301 overlap. The figure shows that the purlins 1300, 1301 are connected to the column 101 in the overlapping zone 1501. Moreover, Fig. 16 shows that rafter stays 110 are mounted between the column 101 and the purlins 1300, 1301 respectively. The rafter stays 110 are connected to the continuous profile 1500 in the overlapping purlin zone 1501. The connection of a rafter stay 110 with a longitudinal purlin 1300 is done by means of a bolt 1602 through one of the perforations 1600. Connecting the columns 101 and the rafter stays 110 to the continuous longitudinal profile 1500 in the overlap zones 1501 implies that the connection is provided in a zone where the continuous profile 1500 has additional strength due to the overlap. This results in a stronger and more stable structure, where the rafter stays 110 guarantee the longitudinal stability of the carport under longitudinal wind forces or a longitudinal impact e.g. due to the collision of a vehicle with a column 101.

After having assembled the framework as is shown in Fig. 15, the rafter stays 110 and the ballast elements 104 are mounted, as is illustrated in Fig. 2. After positioning of the ballast elements 104 they are connected to the longitudinal purlins 102 by means of the connection elements 604, as described above.

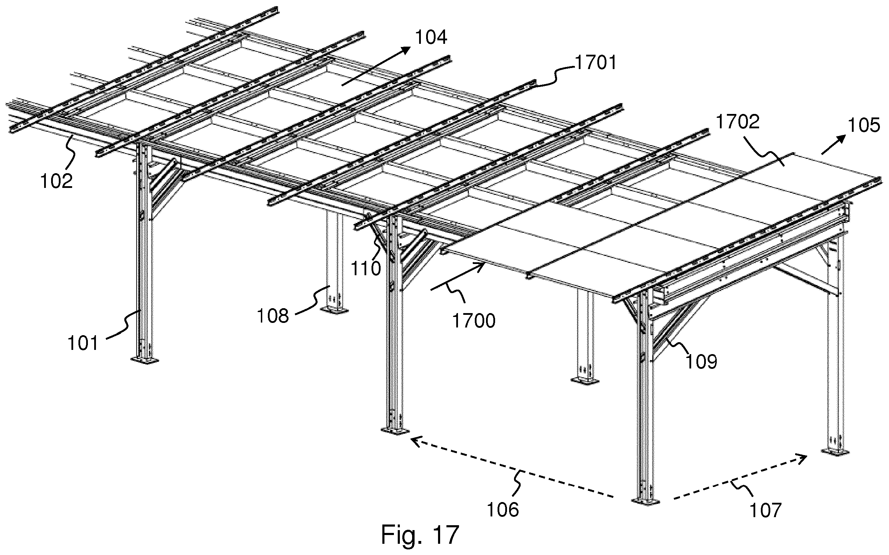

Fig. 17 shows how, after assembly of the structure 200, a solar panel installation 105 may be mounted. The solar panel installation 105 comprises photovoltaic panels 1702 and slide-in profiles 1701. The slide-in profiles 1701 have an elongated shape and are mounted in transverse direction 107. They may be bolted to the longitudinal purlins 102 and/or the transverse module beams 602 of the ballast elements 104, for protection against uplift forces. The slide-in profiles 1701 serve as rails between which the photovoltaic panels 1702 are slid, see 1700 on Fig. 17. Example embodiments of slide-in profiles 1701 are e.g. described in EP3123081. In the embodiment of Fig. 17, the slide-in profiles 1701 have a larger length than the transverse distance between two columns 101 and 108. Therefore, the surface covered by the solar panels 1702 is larger than the surface covered by the roof structure 201.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope as defined by the appended claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A structure (200) for a solar carport (100), comprising:
- a roof structure (201) adapted to support a solar panel installation (105), said roof structure (201) comprising profiles (102, 103) adapted to form the skeleton of said roof structure (201), said profiles (102, 103) comprising longitudinal purlins (102) and transverse beams (103);
- an infrastructure adapted to mount solar panels (305), which solar panels are comprised in said solar panel installation (105), on top of said roof structure (201), said infrastructure comprising construction elements for carrying, connecting or fixing said solar panels (305);
- columns (101, 108) adapted to carry said roof structure (201);
- ballast elements (104),
**characterized in that**:
said ballast elements (104) are construction elements adapted to be installed in said roof structure (201), and comprising concrete or reinforced concrete, thereby providing weight for stabilizing said solar carport (100), such that protection against ascending winds is provided.

2. A structure (200) according to one of the preceding claims,
wherein said profiles (102, 103) are steel profiles.

3. A structure (200) according to one of the preceding claims,
wherein said said profiles (102, 103) comprise longitudinal purlins (102) are adapted to position said ballast elements (104) on top of said purlins (102) or between said purlins (102).

4. A structure (400) according to one of the preceding claims,
wherein said ballast elements (402) are blocks of material (402) to be loosely positioned on top of said purlins (401) or between said purlins (401).

5. A structure (400) according to claim 4,
wherein said blocks of material (402) are blocks of concrete or reinforced concrete.

6. A structure (200) according to one of the preceding claims,
wherein said ballast elements (104) comprise a module frame (600), said module frame (600) comprising transverse module beams (602) and longitudinal module joists (601).

7. A structure (200) according to claim 6,
wherein said structure (200) comprises connection elements (604) adapted to connect said module frame (600) of said ballast elements (104) to said longitudinal purlins (102).

8. A structure (200) according to claim 6 or 7,
wherein said ballast elements (104) are prefabricated and comprise:
- said module frame (600) comprising said transverse module beams (602) and said longitudinal module joists (601), wherein at least one of said longitudinal module joists (601) comprises perforations (603, 801);
- reinforcement nets (800) and/or bars (900) placed through said perforations (603, 801); and
- poured concrete.

9. A structure (200) according to one of the preceding claims,
wherein said longitudinal purlins (1300, 1301) are adapted to slide inside one another, to form a continuous longitudinal profile (1500) of arbitrary length comprising overlapping purlin zones (1501).

10. A structure (200) according to claim 9,
wherein said longitudinal purlins (1300) comprise Z-profiles with upper flange (1400) larger than their bottom flange (1401), said Z-purlins (1300) being alternatingly rotated over 180° to form said continuous longitudinal profile (1500) of arbitrary length.

11. A structure (200) according to one of the preceding claims,
wherein said columns (101, 108) and said transverse beams (103) are adapted to form frame unities (1100), a frame unity (1100) comprising a pair of said columns (101, 108) mutually connected by two of said transverse beams (103) mounted at opposite transverse sides of said columns (101, 108).

12. A structure (200) according to one of the preceding claims,
wherein said longitudinal purlins (102) comprise perforations (1600) at regular distance along their length.

13. A structure (200) according to claim 12 and claim 11 and claim 9,
wherein said perforations (1600) are adapted to connect said continuous longitudinal profile (1500) to said frame unities (1100) in said overlapping purlin zones (1501).

14. A structure (200) according to claim 9,
wherein said structure (200) comprises rafter stays (109, 110) adapted to connect said columns (101, 108) to said transverse beams (103) and/or said longitudinal purlins (102) following an inclined direction relative to said columns (101, 108), and wherein at least some of said rafter stays (110) are adapted to connect said columns (101, 108) to said continuous longitudinal profile (1500) in said overlapping purlin zones (1501).

15. A structure (200) according to one of the preceding claims,
wherein said structure (200) comprises solar panels (305), and an infrastructure adapted to mount the solar panels on top of said roof structure (201).

16. A solar carport (100) comprising
- a structure (200) according to one of the preceding claims;
a solar panel installation (105) comprising slide-in profiles (1701) for solar panels (1702).

17. A method for assembling a structure (200) for a solar carport (100), comprising:
- providing a structure (200) according to Claim 1;
- placing said columns (101, 108) in upright position;
- assembling a roof structure (201) at the top of said columns (101, 108), said roof structure (201) comprising said profiles (102, 103) and said ballast elements (104).

18. A method according to claim 17, comprising:
- providing said profiles (102, 103) comprising longitudinal purlins (1300, 1301) and transverse beams (103), said longitudinal purlins (102) comprising perforations (1600) at regular distance along their length;
- assembling frame unities (1100), each of said frame unities (1100) comprising a pair of said columns (101, 108) mutually connected by two of said transverse beams (103) mounted at opposite transverse sides of said columns (101, 108);
- placing said frame unities (1100) in upright position, according to the width (1801) of available parking places (1804);
- sliding said longitudinal purlins (1300, 1301) inside one another, to form a continuous longitudinal profile (1500) according to the available total parking length (1802), said continuous longitudinal profile (1500) having overlapping purlin zones (1501) according to the width (1801) of available parking places (1804);
- connecting said overlapping purlin zones (1501) of said continuous longitudinal profile (1500) to said frame unities (1100) using said perforations (1600) according to the mutual distance of said frame unities (1100);
- providing rafter stays (110) and connecting at least some of said rafter stays (110) between said columns (101, 108) and said overlapping purlin zones (1501) of said continuous longitudinal profile (1500) using said perforations (1600) according to the mutual distance of said frame unities (1100).

## Patentansprüche

1. Struktur (200) für einen Solar-Carport (100), umfassend:
- eine Dachstruktur (201), die dazu ausgelegt ist, eine Solarpanelinstallation (105) zu stützen, wobei die Dachstruktur (201) Profile (102, 103) umfasst, die dazu ausgelegt sind, das Skelett der Dachstruktur (201) auszubilden, wobei die Profile (102, 103) Längspfetten (102) und Querträger (103) umfassen;
- eine Infrastruktur, die dazu ausgelegt ist, Solarpanels (305) zu lagern, wobei die Solarpanels in der Solarpanelinstallation (105) oben auf der Dachstruktur (201) umfasst sind, wobei die Infrastruktur Konstruktionselemente zum Tragen, Verbinden oder Fixieren der Solarpanels (305) umfasst;
- Säulen (101, 108), die dazu ausgelegt sind, die Dachstruktur (201) zu tragen;
- Ballastelemente (104),
**dadurch gekennzeichnet, dass**:
die Ballastelemente (104) Konstruktionselemente sind, die dazu ausgelegt sind, in der Dachstruktur (201) installiert zu sein, und Beton oder Stahlbeton umfassen, wodurch Gewicht zum Stabilisieren des Solar-Carports (100) derart bereitgestellt wird, dass Schutz gegen aufsteigende Winde bereitgestellt wird.

2. Struktur (200) nach einem der vorhergehenden Ansprüche,
wobei die Profile (102, 103) Stahlprofile sind.

3. Struktur (200) nach einem der vorhergehenden Ansprüche,
wobei die die Profile (102, 103) Längspfetten (102) umfassen dazu ausgelegt sind, die Ballastelemente (104) oben auf den Pfetten (102) oder zwischen den Pfetten (102) zu positionieren.

4. Struktur (400) nach einem der vorhergehenden Ansprüche,
wobei die Ballastelemente (402) Materialblöcke (402) sind, die lose oben auf den Pfetten (401) oder zwischen den Pfetten (401) zu positionieren sind.

5. Struktur (400) nach Anspruch 4,
wobei die Materialblöcke (402) Blöcke aus Beton oder Stahlbeton sind.

6. Struktur (200) nach einem der vorhergehenden Ansprüche,
wobei die Ballastelemente (104) einen Modulrahmen (600) umfassen, wobei der Modulrahmen (600) Quermodulträger (602) und Längsmodulbalken (601) umfasst.

7. Struktur (200) nach Anspruch 6,
wobei die Struktur (200) Verbindungselemente (604) umfasst, die dazu ausgelegt sind, den Modulrahmen (600) der Ballastelemente (104) mit den Längspfetten (102) zu verbinden.

8. Struktur (200) nach Anspruch 6 oder 7,
wobei die Ballastelemente (104) vorgefertigt sind und Folgendes umfassen:
- den Modulrahmen (600), der die Quermodulträger (602) und die Längsmodulbalken (601) umfasst, wobei mindestens einer der Längsmodulbalken (601) Perforationen (603, 801) umfasst;
- Verstärkungsnetze (800) und/oder -stäbe (900), die durch die Perforationen (603, 801) platziert sind; und
- Gussbeton.

9. Struktur (200) nach einem der vorhergehenden Ansprüche,
wobei die Längspfetten (1300, 1301) dazu ausgelegt sind, sich ineinander zu schieben, um ein kontinuierliches Längsprofil (1500) von beliebiger Länge auszubilden, das überlappende Pfettenzonen (1501) umfasst.

10. Struktur (200) nach Anspruch 9,
wobei die Längspfetten (1300) Z-Profile mit einem oberen Flansch (1400) umfassen, der größer als ihr unterer Flansch (1401) ist, wobei die Z-Pfetten (1300) abwechselnd um 180° gedreht sind, um das kontinuierliche Längsprofil (1500) von beliebiger Länge auszubilden.

11. Struktur (200) nach einem der vorhergehenden Ansprüche,
wobei die Säulen (101, 108) und die Querträger (103) dazu ausgelegt sind, Rahmeneinheiten (1100) auszubilden, wobei eine Rahmeneinheit (1100) ein Paar der Säulen (101, 108) umfasst, die gegenseitig durch zwei der Querträger (103) verbunden sind, die an gegenüberliegenden Querseiten der Säulen (101, 108) gelagert sind.

12. Struktur (200) nach einem der vorhergehenden Ansprüche,
wobei die Längspfetten (102) Perforationen (1600) in regelmäßigem Abstand entlang ihrer Länge umfassen.

13. Struktur (200) nach Anspruch 12 und Anspruch 11 und Anspruch 9,
wobei die Perforationen (1600) dazu ausgelegt sind, das kontinuierliche Längsprofil (1500) in den überlappenden Pfettenzonen (1501) mit den Rahmeneinheiten (1100) zu verbinden.

14. Struktur (200) nach Anspruch 9,
wobei die Struktur (200) Sparrenstreben (109, 110) umfasst, die dazu ausgelegt sind, die Säulen (101, 108) einer geneigten Richtung relativ zu den Säulen (101, 108) folgend mit den Querträgern (103) und/oder den Längspfetten (102) zu verbinden,
und wobei mindestens einige der Sparrenstreben (110) dazu ausgelegt sind, die Säulen (101, 108) in den überlappenden Pfettenzonen (1501) mit dem kontinuierlichen Längsprofil (1500) zu verbinden.

15. Struktur (200) nach einem der vorhergehenden Ansprüche,
wobei die Struktur (200) Solarpanels (305) und eine Infrastruktur umfasst, die dazu ausgelegt ist, die Solarpanels oben auf der Dachstruktur (201) zu lagern.

16. Solar-Carport (100), umfassend
- eine Struktur (200) nach einem der vorhergehenden Ansprüche;
eine Solarpanelinstallation (105), die Einschubprofile (1701) für Solarpanels (1702) umfasst.

17. Verfahren zum Montieren einer Struktur (200) für einen Solar-Carport (100), umfassend:
- Bereitstellen einer Struktur (200) nach Anspruch 1;
- Platzieren der Säulen (101, 108) in aufrechter Position;
- Montieren einer Dachstruktur (201) an der Oberseite der Säulen (101, 108), wobei die Dachstruktur (201) die Profile (102, 103) und die Ballastelemente (104) umfasst.

18. Verfahren nach Anspruch 17, umfassend:
- Bereitstellen der Profile (102, 103), die Längspfetten (1300, 1301) und Querträger (103) umfassen, wobei die Längspfetten (102) Perforationen (1600) in regelmäßigem Abstand entlang ihrer Länge umfassen;
- Montieren von Rahmeneinheiten (1100), wobei jede der Rahmeneinheiten (1100) ein Paar der Säulen (101, 108) umfasst, die gegenseitig durch zwei der Querträger (103) verbunden sind, die an gegenüberliegenden Querseiten der Säulen (101, 108) gelagert sind;
- Platzieren der Rahmeneinheiten (1100) in aufrechter Position gemäß der Breite (1801) von verfügbaren Parkplätzen (1804);
- Ineinanderschieben der Längspfetten (1300, 1301), um ein kontinuierliches Längsprofil (1500) gemäß der verfügbaren Gesamtparklänge (1802) auszubilden, wobei das kontinuierliche Längsprofil (1500) überlappende Pfettenzonen (1501) gemäß der Breite (1801) von verfügbaren Parkplätzen (1804) aufweist;
- Verbinden der überlappenden Pfettenzonen (1501) des kontinuierlichen Längsprofils (1500) mit den Rahmeneinheiten (1100) unter Verwendung der Perforationen (1600) gemäß dem gegenseitigen Abstand der Rahmeneinheiten (1100);
- Bereitstellen von Sparrenstreben (110) und Verbinden von mindestens einigen der Sparrenstreben (110) zwischen den Säulen (101, 108) und den überlappenden Pfettenzonen (1501) des kontinuierlichen Längsprofils (1500) unter Verwendung der Perforationen (1600) gemäß dem gegenseitigen Abstand der Rahmeneinheiten (1100).

## Revendications

1. Structure (200) pour un abri de voiture solaire (100), comprenant :
- une structure de toit (201) adaptée pour supporter une installation de panneaux solaires (105), ladite structure de toit (201) comprenant des profils (102, 103) adaptés pour former le squelette de ladite structure de toit (201), lesdits profils (102, 103) comprenant des pannes longitudinales (102) et des poutres transversales (103) ;
- une infrastructure adaptée pour monter des panneaux solaires (305), lesquels panneaux solaires sont compris dans ladite installation de panneaux solaires (105), sur le dessus de ladite structure de toit (201), ladite infrastructure comprenant des éléments de construction destinés à porter, raccorder ou fixer lesdits panneaux solaires (305) ;
- des colonnes (101, 108) adaptées pour porter ladite structure de toit (201) ;
- des éléments de ballast (104),
**caractérisée en ce que** :
lesdits éléments de ballast (104) sont des éléments de construction adaptés pour être installés dans ladite structure de toit (201), et comprenant du béton ou du béton armé, fournissant ainsi un poids pour stabiliser ledit abri de voiture solaire (100), de sorte qu'une protection contre les vents ascendants soit fournie.

2. Structure (200) selon l'une des revendications précédentes,
lesdits profils (102, 103) étant des profils en acier.

3. Structure (200) selon l'une des revendications précédentes,
lesdits profils (102, 103) comprenant des pannes longitudinales (102) qui sont adaptées pour positionner lesdits éléments de ballast (104) sur lesdites pannes (102) ou entre lesdites pannes (102).

4. Structure (400) selon l'une des revendications précédentes,
lesdits éléments de ballast (402) étant des blocs de matériau (402) destinés à être positionnés de manière lâche sur lesdits pannes (401) ou entre lesdites pannes (401).

5. Structure (400) selon la revendication 4,
lesdits blocs de matériau (402) sont des blocs de béton ou de béton armé.

6. Structure (200) selon l'une des revendications précédentes,
lesdits éléments de ballast (104) comprenant une ossature de module (600), ladite ossature de module (600) comprenant des poutres de module transversales (602) et des solives de module longitudinales (601).

7. Structure (200) selon la revendication 6, ladite structure (200) comprenant des éléments de raccordement (604) adaptés pour raccorder ladite ossature de module (600) desdits éléments de ballast (104) auxdites pannes longitudinales (102).

8. Structure (200) selon la revendication 6 ou 7, lesdits éléments de ballast (104) étant préfabriqués et comprenant :
- ladite ossature de module (600) comprenant lesdites poutres de module transversales (602) et lesdites solives de module longitudinales (601), au moins l'une desdites solives de module longitudinales (601) comprenant des perforations (603, 801) ;
- des filets (800) et/ou des barres (900) de renforcement placés à travers lesdites perforations (603, 801) ; et
- du béton coulé.

9. Structure (200) selon l'une des revendications précédentes, lesdites pannes longitudinales (1300, 1301) étant adaptées pour coulisser l'une dans l'autre, pour former un profil longitudinal continu (1500) de longueur arbitraire comprenant des zones de pannes se chevauchant (1501).

10. Structure (200) selon la revendication 9, lesdites pannes longitudinales (1300) comprenant des profils en Z avec une aile supérieure (1400) plus grande que leur aile inférieure (1401), lesdites pannes en Z (1300) étant alternativement tournées sur 180° pour former ledit profil longitudinal continu (1500) de longueur arbitraire.

11. Structure (200) selon l'une des revendications précédentes, lesdites colonnes (101, 108) et lesdites poutres transversales (103) étant adaptées pour former des unités d'ossature (1100), une unité d'ossature (1100) comprenant une paire desdites colonnes (101, 108) mutuellement raccordées par deux desdites poutres transversales (103) montées sur des côtés transversaux opposés desdites colonnes (101, 108).

12. Structure (200) selon l'une des revendications précédentes, lesdites pannes longitudinales (102) comprenant des perforations (1600) à distance régulière le long de leur longueur.

13. Structure (200) selon la revendication 12 et la revendication 11 et la revendication 9, lesdites perforations (1600) étant adaptées pour raccorder ledit profil longitudinal continu (1500) auxdites unités d'ossature (1100) dans lesdites zones de pannes se chevauchant (1501).

14. Structure (200) selon la revendication 9,
ladite structure (200) comprenant des bracons (109, 110) adaptés pour raccorder lesdites colonnes (101, 108) auxdites poutres transversales (103) et/ou auxdites pannes longitudinales (102) suivant une direction inclinée par rapport auxdites colonnes (101, 108), et au moins certains desdits bracons (110) étant adaptés pour raccorder lesdites colonnes (101, 108) audit profil longitudinal continu (1500) dans lesdites zones de pannes se chevauchant (1501).

15. Structure (200) selon l'une des revendications précédentes,
ladite structure (200) comprenant des panneaux solaires (305), et une infrastructure adaptée pour monter les panneaux solaires sur le dessus de ladite structure de toit (201).

16. Abri de voiture solaire (100) comprenant
- une structure (200) selon l'une des revendications précédentes ;
une installation de panneaux solaires (105) comprenant des profils coulissants (1701) pour des panneaux solaires (1702).

17. Procédé permettant l'assemblage d'une structure (200) pour un abri de voiture solaire (100), comprenant :
- la fourniture d'une structure (200) selon la revendication 1 ;
- le placement desdites colonnes (101, 108) en position verticale ;
- l'assemblage d'une structure de toit (201) au sommet desdites colonnes (101, 108), ladite structure de toit (201) comprenant lesdits profils (102, 103) et lesdits éléments de ballast (104).

18. Procédé selon la revendication 17, comprenant :
- la fourniture desdits profils (102, 103) comprenant des pannes longitudinales (1300, 1301) et des poutres transversales (103), lesdites pannes longitudinales (102) comprenant des perforations (1600) à distance régulière le long de leur longueur ;
- l'assemblage d'unités d'ossature (1100), chacune desdites unités d'ossature (1100) comprenant une paire desdites colonnes (101, 108) mutuellement raccordées par deux desdites poutres transversales (103) montées sur des côtés transversaux opposés desdites colonnes (101, 108) ;
- le placement desdites unités d'ossature (1100) en position verticale, selon la largeur (1801) des places de stationnement disponibles (1804) ;
- le coulissement desdites pannes longitudinales (1300, 1301) l'une dans l'autre, pour former un profil longitudinal continu (1500) selon la longueur totale de stationnement disponible (1802), ledit profil longitudinal continu (1500) possédant des zones de pannes se chevauchant (1501) selon la largeur (1801) des places de stationnement disponibles (1804) ;
- le raccordement desdites zones de pannes se chevauchant (1501) dudit profil longitudinal continu (1500) auxdites unités d'ossature (1100) à l'aide desdites perforations (1600) selon la distance mutuelle desdites unités d'ossature (1100) ;
- la fourniture des bracons (110) et le raccordement d'au moins certains desdits bracons (110) entre lesdites colonnes (101, 108) et lesdites zones de pannes se chevauchant (1501) dudit profil longitudinal continu (1500) à l'aide desdites perforations (1600) selon la distance mutuelle desdites unités d'ossature (1100).
